# EUROPEAN PATENT SPECIFICATION

(11) **EP 1 221 400 B1**
(45) Date of publication and mention of the grant of the patent: **19.05.2004**
(21) Application number: 99974060.8
(22) Date of filing: 29.09.1999
(51) Int. Cl.: B60R 21/20, B60R 13/02

(54) **TRIMMING FOR VEHICLE ROOFS HAVING A PRE-ASSEMBLED AIRBAG**
DACHVERKLEIDUNG MIT VORMONTIERTEM AIRBAG
REVETEMENT POUR TOITS DE VEHICULES COMPRENANT UN AIRBAG DE TETE PRE-MONTE

(43) Date of publication of application: 10.07.2002
(73) Proprietor: GRUPO ANTOLIN-INGENIERIA, S.A., 09080 Burgos (ES)
(72) Inventor: FUENTES GARCIA, Tomás, Grupo Antolin-Ingenieria, E-09007 Burgos (ES)
(74) Representative: Carpintero Lopez, Francisco
(86) International application number: PCT/ES1999/000305
(87) International publication number: WO 2001/023222

(56) References cited:
- EP-A- 0 795 445
- EP-A- 0 810 128
- EP-A- 0 903 270
- WO-A-99/41113
- DE-A- 19 632 222
- US-A- 2 834 609
- US-A- 5 921 576

## Description

### OBJECT OF THE INVENTION

The invention relates to a vehicle roof lining according to the preamble of claim 1. Such a vehicle roof lining is known from WO-A-99 41 113.

The object of the invention is to provide automobile manufacturers with a modular roof lining which incorporates a preinstalled head airbag set, such that when said lining is mounted and attached to the top of the vehicle body in the production line, the airbag is simultaneously installed without requiring any further or complementary operations beyond those required to assemble the lining.

This object is achieved by a vehicle roof lining according to claim 1.

### BACKGROUND OF THE INVENTION

Currently automobile manufacturers are incorporating novel passive safety systems in their vehicles, one of which is the head airbag which comprises an inflatable bag folded within a sleeve made of the same or different material, the latter provided with a weakened seam or line which allows to keep the inflatable bag folded yet is torn when the bag is inflated as a result of a lateral impact and /or overturning of the vehicle. Said airbag is meant to protect occupants by an automatic inflation of the bags, which is conventionally achieved by a gas generator suitably related to the inflatable bag.

Generally, said head airbags are attached to the vehicle body and the roof lining later installed, so that the automobile manufacturer receives the airbag set and the lining separately and must therefore carry out two independent assemblies. This consumes a considerable amount of time as two elements need to be separately handled and assembled, in addition to requiring different attachment components for each element (airbag set and lining).

European Patent EP-95500087.2 describes a self supporting top with integrated accessories for direct assembly on vehicle roofs, so that the self supporting top roof makes up what is generally known as a roof liner. IN this European Patent accessories are incorporated such as handles, sunshades, etc. which are provided with pins passing through orifices provided in the liner, and are retained by means of clips attached to the projecting ends of said pins, such that the assembly involves a direct opposition of the clips and the openings provided in the vehicle body, and pressing on the structure results in locking of the clips due to their flaps and the truncated structure which aids in their penetration in the body opening, as once the opening is passed the flaps expand and thereby each clip is retained in the corresponding opening.

The system described in European Patent EP-95500087 allows a direct assembly of the roof lining and its accessories without the need of a screwdriver or any other tools required in other assembly systems.

European Patent EP-98914891.1 describes a system for attaching accessories to modular self-supporting elements, and these to the vehicle body, and among these self-supporting modular elements is included the aforementioned roof liner. In this case the accessories are attached to the liner by a prior connection of the accessory to a mechanism in which stands out an "incomplete" pyramid shaped protrusion, which in combination with a thin plastic sheet initially attaches the mechanism to the self supporting element (roof liner) once the latter is placed between the sheet and the base of the pyramidal protrusion.

European Patent 98914892.9 describes a further means for attaching accessories to self supporting elements such as vehicle roof liners, here based on a type of clip such as that of European Patent EP-95500087 mentioned above, but in combination with a plastic shank forming part of the accessory to be attached.

Document WO-A-99 411 13 is know, which describes a side airbag device for vehicles which is integrated in the vehicle roof, with an inflation device integrated in the same roof, the activation of which airbags is aided by rails along which move the sliding attachment elements of the airbag module during its activation.

Using any of the methods described in these European Patents for attaching the roof liner to a vehicle body, a roof liner has been designed which incorporates a preinstalled head airbag for final mounting on the vehicle body.

### DESCRIPTION OF THE INVENTION

The invention consists of a roof lining provided with certain details which allow pre-instalment of an airbag module, forming a compact unit which simplifies transport handling and assembly as all operations are performed with a single element, and not with two separate ones, the lining and the airbag module, as is conventionally the case. The means used for the final attachment of the lining on the vehicle body are preferably the same as those which maintain the airbag preinstalled on the lining, which may be any of those described in the European Patents of the background section.

More specifically, the lining as a support for the airbag module shall have characteristics suitable for a correct assembly on the vehicle body in question, with a specific design allowing enough space to place the head airbag, as well as characteristics allowing a correct inflation of the airbag.

Said lining shall be provided with a number of orifices for the elements which will initially be used to preinstall the airbag module, and the final assembly of the compact unit formed by the lining and the airbag module. Final attachment means shall preferably belong to certain accessories and be complemented with a end attachment clip concealed in the lining, used as anchoring or final attachment of the lining, and thereby of the compact unit which it forms together with the airbag module, to the vehicle body, with a prior assembly of said clips in housings provided in the lateral rail area of the vehicle body.

Said lining may or may not be provided in its rear edge with a fold, which would serve as a means of attachment during pre-installation of the corresponding gas generator which inflates the airbag. The fold would also be used to aid in final assembly of the lining on the body.

As relates to the airbag module itself, it is conventionally comprised by a main inflatable bag meant to protect the user in the event of an impact and turnover of the vehicle, which bag is complemented by a sheath of the same or different material conventionally provided with a weakened line or seam which allows tearing when the main bag begins to inflate, which in turn is provided with lateral extensions as tabs with suitably reinforce orifices through which pass the aforementioned attachment means.

The aforementioned gas generator may be incorporated or connected to the airbag module during its pre-instalment on the roof lining, or it may be an independent unit connected upon final assembly.

In either case the gas generator is related to the airbag module on the latter's ends, using a flange, so that the gas generator is has a protection case provided with tabs with orifices which in pre-installation are placed in the end or rear fold of the lining and remain concealed in it.

Likewise, both the anterior and posterior ends of the airbag module may be provided with drilled tension bands, with a reinforced perimeter, by which the bands are attached to the vehicle body, maintaining a correct position of the inflatable bag during its inflation, in order to obtain the desired safety effects.

The compact unit formed by the lining and the airbag module conveniently placed in the latter's sides will be easily handled, without requiring the use of any additional attachment means, although it may be that due to their geometry a different means of attachment is required in pre-installation, such as an adhesive on the lining edge on its hidden face, so that when the airbag module is pressed on it it remains in place so that it may be handled in the assembly line.

A further possibility is to obtain this ease of handling by means of a snap-on system in which the male part is integrated in the hidden face of the lining, which is obtained during the construction of the lining, while the female part is integrated in the sheath of the inflatable airbag.

If the lining were lacking the rear fold the gas generator could be attached by the aforementioned snap-on system or by a two-sided adhesive tape on the generator case.

### DESCRIPTION OF THE DRAWINGS

These and further characteristics of the invention will be more clearly understood in view of the accompanying drawings of a preferred embodiment, where for purposes of illustration only the following is shown:
Figure 1.- Shows a view from the rear or hidden face of the vehicle lining incorporating the head airbag module in the pre-installation stage, with the gas generator for inflation, together with an enlargement of the rear edge of the folded lining.
Figure 2.- Shows a separate view of the head airbag module.
Figure 3.- Shows an enlarged inset of the airbag module of the previous figure, revealing on e of the lateral extensions of the flexible bag with the orifice and its perimetral reinforcement, as well as the snap-on means provided in the sheath of the airbag module.
Figure 4.- Shows a detailed view of part of the snap-on system which maybe used for pre-installation attachment of the roof lining and the head airbag module.
Figure 5.- Shows a general perspective exploded view of the roof lining, the head airbag and the rail of the vehicle body.
Figure 6.- Finally shows the pre-installation of the roof lining and the head airbag module.

### PREFERRED EMBODIMENT OF THE INVENTION

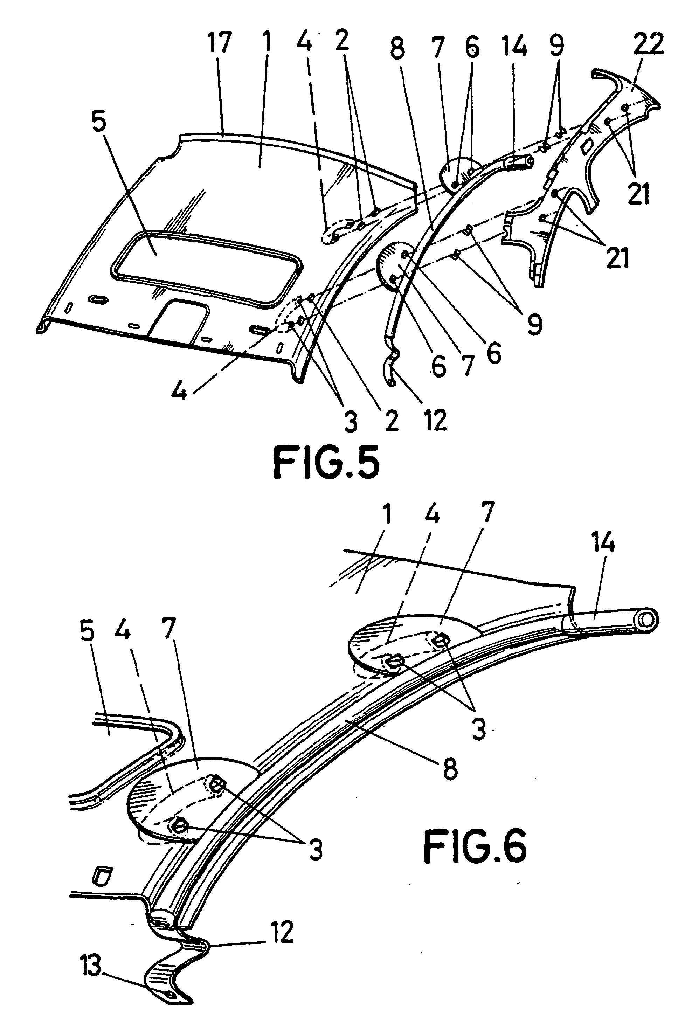

As may be seen in the figures, the roof lining, labelled (1), is a conventional lining which may incorporate corresponding accessories, such as handles, sunshades, etc., including a sunroof (5), as shown in figures 5 and 6.

Through orifices (2) are passes pins (3), which are part of the accessories (4) which are attached to roof lining (1) by an anterior placing of the latter, while elements (3) are exposed on the rear side and in turn pass through orifices (6) of the extensions (7) of the head airbag module (8), so that on the ends of elements (3) and after these have passed through orifices (6), attachment and anchoring is achieved by clips (9) with similar elements, thus obtaining the assembly of head airbag module (8) on roof lining (1), and allowing joint installation or final assembly on the vehicle body using the same pre-installation means corresponding to elements (3) and clips (9).

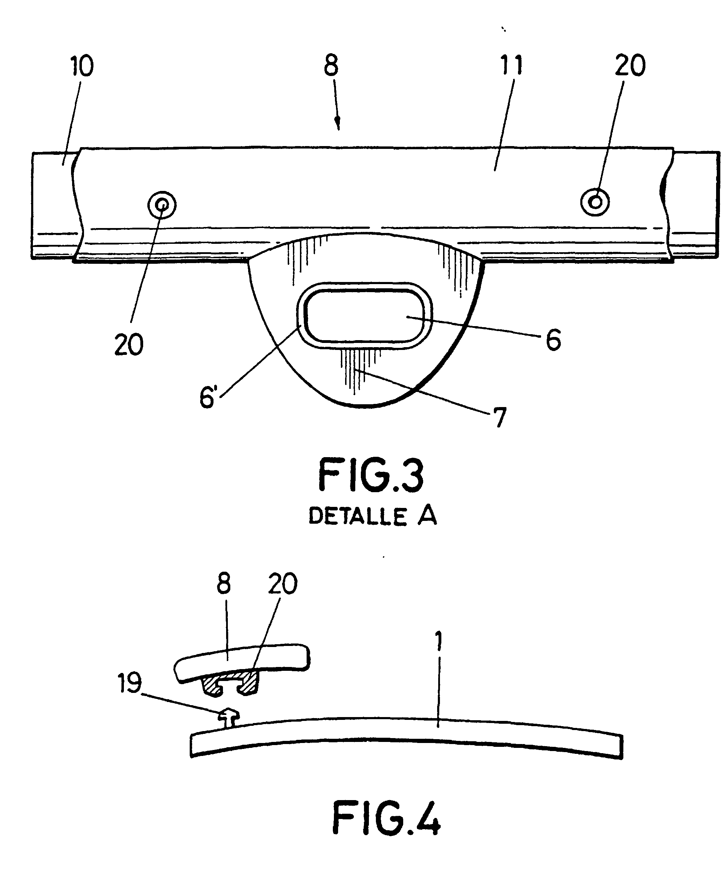

Airbag module (8) comprises a inflatable bag (10), which when inactive is folded within a sheath which can be made of the same or a different material, such that extensions (7) in the form of flaps, as shown in figure 3, emerge from inflatable bag (10) on the side of the module and are provided with the orifice and orifices (6), which in turn have a perimetral thickening (6') in order to prevent ripping during the inflation of main bag (10).

Said airbag module (8) may be provided on one or both of its ends with tension bands (12), incorporating a perimetral orifice (13) with a lateral seam, such that through orifice (13) the band or bands (12) may be attached to the vehicle body by a suitable means of attachment, such as a snap on system o any other.

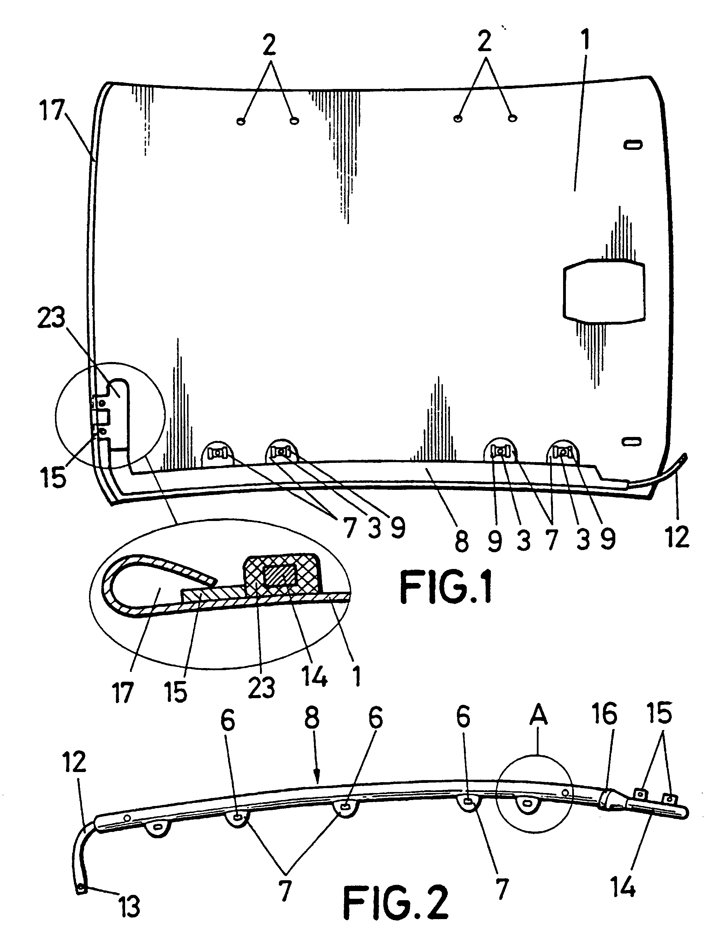

Additionally, head airbag (8) is complemented by gas generator (14) which inflates the bag, which generator is provided with a protection case (25) which in turn has tabs (15), and which is attached by a flange or another suitable element (16), such that tabs (15) of the generator (14), when it is attached to airbag (8), may be concealed in the rear edge of the roof lining (1), as shown in figure 1.

Likewise, figure 1 shows the airbag module (8) attached by an adhesive tape (18) which keeps it in place during transportation and assembly to the body.

A further possibility is to attach the airbag module (8) to the roof lining (1) by a snap on system as shown in detail in figure 4, where the male element (19) is on lining (1) on its hidden face, and the female element (20) is in sheath (11) of airbag module (8).

This snap on system may also be used to attach gas generator (14) to roof lining (1) when the latter lacks a rear fold (17). Finally, the compact unit formed by the roof lining (1) and the head airbag module (8) preinstalled on it may be finally secured in a single assembly operation on the vehicle body, by inserting attachment clips (9) in their respective housings (21) provided for such purpose on lateral rails (22) of the vehicle body.

## Claims

1. Vehicle roof lining with a preinstalled head airbag, consisting of a body with suitable means and characteristics for its assembly onto the vehicle body concerned, and a head airbag module (8) incorporated in preinstall situation, which remains linked to the same, the head airbag module (8) comprising a conventional inflatable bag (10), said head airbag module (8) is provided with lateral extensions (7) in the form of tabs, which have orifices (6) through which pass attachment elements (3) which in turn pass through orifices (2) provided for such purpose in roof lining (1), with the airbag module (8) suitably attached to an area of roof lining (1) by clips (9), **characterised in that** the inflatable bag (10) is folded within a sheath (11) on which said lateral extensions (7) are formed and said orfices have a perimetral reinforcement (6').

2. Vehicle roof lining with a preinstalled head airbag, as claimed in above claim, **characterised in that** roof lining (1) is provided on its rear face with a fold (17) inside which are concealed tabs (15) of the case of gas generator (14) attached to one end of airbag module (8) in order to inflate the inner bag (10).

3. Vehicle roof lining with a preinstalled head airbag, as claimed in above claims, **characterised in that** airbag module (8) incorporates a gas generator (14) in its assembly onto roof lining (1).

4. Vehicle roof lining with a preinstalled head airbag, as claimed in above claims, **characterised in that** the airbag module is attached by means of an adhesive tape (18) which prevents it from moving during transport and assembly of the lining on the corresponding vehicle body.

5. Vehicle roof lining with a preinstalled head airbag, as claimed in claims I to 4, **characterised in that** airbag module (8) is attached by a snap on system in which the male element (19) is part of the lining (1) and the female element (20) is part of the airbag module (8), specifically part of its sheath.

6. Vehicle roof lining with a preinstalled head airbag, as claimed in claims 1 to 4, **characterised in that** when gas generator (14) is part of airbag module (8) and roof lining (1) lacks a rear fold (17) said generator is attached by a suitable snap-on system.

## Patentansprüche

1. Fahrzeugdachverkleidung mit voreingebautem Kopfairbag, die aus einem Körper mit den angemessenen Mitteln und Eigenschaften besteht, um sie auf den entsprechenden Fahrzeugkörper aufzubauen und aus einem Kopfairbagmodul (8), das schon im Einbauzustand vorhanden ist, das mit demselben verbunden bleibt, wobei das Kopfairbagmodul (8) einen herkömmlichen aufblasbaren Airbag (10) umfasst und besagtes Kopfairbagmodul (8) verfügt über seitliche Verlängerungen (7) in Form von Klappen, die Öffnungen (6) aufwesen, durch die Befestigungselemente (3) geführt werden, die ihrerseits durch Öffnungen (2) geführt werden, die zu diesem Zweck in der Dachverkleidung (1) angebracht sind, wobei das Airbagmodul (8) angemessen in einem Bereich der Dachverkleidung (1) durch Klemmen (9) befestigt werden, **dadurch gekennzeichnet, dass** der aufblasbare Airbag (10) in einer Hülle (11) auf besagten seitlichen Verlängerungen (7) gefaltet ist und besagte Öffnungen umfängliche Verstärkungen (6') aufweist.

2. Fahrzeugdachverkleidung mit voreingebautem Kopfairbag gemäss dem vorangegangenen Anspruch, **dadurch gekennzeichnet, dass** die Dachverkleidung (1) über eine Rückseite verfügt mit einer Falte (17), in der sich versteckte Klappen (15) befinden für das Gehäuse eines Gasgenerators (14), der am Ende des Airbagmoduls (8) befestigt ist, um den inneren Airbag (10) aufzublasen.

3. Fahrzeugdachverkleidung mit voreingebautem Kopfairbag, gemäss den vorangegangenen Ansprüchen, **dadurch gekennzeichnet, dass** das Airbagmodul (8) einen Gasgenerator (14) bei der Montage auf der Dachverkleidung (1) aufweist.

4. Fahrzeugdachverkleidung mit voreingebautem Kopfairbag, gemäss den vorangegangenen Ansprüchen, **dadurch gekennzeichnet, dass** das Airbagmodul mittels Klebeband (18) befestigt ist, das verhindert, dass dieses sich während des Transports und Einbaus der Verkleidung auf dem entsprechenden Fahrzeugkörper bewegt.

5. Fahrzeugdachverkleidung mit voreingebautem Kopfairbag, gemäss den Ansprüchen 1 bis 4, **dadurch gekennzeichnet, dass** das Airbagmodul (8) mittels eines Aufstecksystems befestigt wird, wobei das Steckerelement (19) Teil der Verkleidung (1) ist und das Aufnahmeelement (20) Teil des Airbagmoduls (8), konkret seiner Hülle ist.

6. Fahrzeugdachverkleidung mit voreingebautem Kopfairbag, gemäss den Ansprüchen 1 bis 4, **dadurch gekennzeichnet, dass** wenn der Gasgenerator (14) Teil des Airbagmoduls (8) ist, und die Dachverkleidung (1) keine rückseitige Falte (17) aufweist, besagter Generator mit einem geeigneten Stecksystem befestigt wird.

## Revendications

1. Revêtement de toit de véhicule avec un airbag de tête pré-installé, consistant en un corps ayant des moyens et des caractéristiques appropriés pour son assemblage sur la carrosserie du véhicule en question, et un module (8) d'airbag de tête incorporé dans un emplacement de pré-installation, qui demeure lié à celle-ci, le module (8) d'airbag de tête comprenant une poche gonflable conventionnelle (10), ledit module (8) d'airbag de tête est pourvu de saillies latérales (7) sous la forme d'oreilles, qui ont des orifices (6), à travers lesquels passent des éléments de fixation (3) qui à leur tour passent à travers des orifices (2) prévus à cet effet dans le revêtement de toit (1), avec le module (8) d'airbag fixé adéquatement sur une zone du revêtement de toit (1 ) au moyen de clips (9), **caractérisé en ce que** la poche gonflable (10) est pliée au sein d'un écran (11) sur lequel se forment lesdites saillies latérales (7) et lesdits orifices ont un renforcement périmétral (6').

2. Revêtement de toit de véhicule avec un airbag de tête pré-installé, selon la revendication antérieure, **caractérisé en ce que** le revêtement de toit (1) est pourvu sur sa face arrière d'un repli (17) à l'intérieur duquel se cachent des oreilles (15) du boîtier du générateur de gaz (14) fixé à une extrémité du module (8) d'airbag afin de gonfler la poche intérieure (10).

3. Revêtement de toit de véhicule avec un airbag de tête pré-installé, selon les revendications antérieures, **caractérisé en ce que** le module (8) d'airbag incorpore un générateur de gaz (14) dans son assemblage sur le revêtement de toit (1).

4. Revêtement de toit de véhicule avec un airbag de tête pré-installé, selon les revendications antérieures, **caractérisé en ce que** le module d'airbag est fixé au moyen d'une bande adhésive (18) qui le prévient de se déplacer pendant le transport et l'assemblage du revêtement sur la carrosserie du véhicule correspondant.

5. Revêtement de toit de véhicule avec un airbag de tête pré-installé, selon les revendications 1 à 4, **caractérisé en ce que** le module (8) d'airbag est fixé par un système encliquetable sur lequel l'élément mâle (19) fait partie du revêtement (1) et l'élément femelle (20) fait partie du module d'airbag (8), plus précisément de son écran.

6. Revêtement de toit de véhicule avec un airbag de tête pré-installé, selon les revendications 1 à 4, **caractérisé en ce que** lorsque le générateur de gaz (14) fait partie du module (8) d'airbag et le revêtement (1 ) manque d'un repli arrière (17) ledit générateur est fixé au moyen d'un système approprié encliquetable.
